Europäisches Patentamt

European Patent Office

Office européen des brevets

(11) Numéro de publication: **0 436 931 A1**

# (12) DEMANDE DE BREVET EUROPEEN

(21) Numéro de dépôt: 90125538.0

(22) Date de dépôt: 27.12.90

(51) Int. Cl.⁵: **H04L 12/40**

(30) Priorité: 11.01.90 FR 9000269

(43) Date de publication de la demande:
17.07.91 Bulletin 91/29

(84) Etats contractants désignés:
AT BE DE ES FR GB IT NL

(71) Demandeur: **ALCATEL BUSINESS SYSTEMS**
**12, rue de la Baume**
**F-75008 Paris(FR)**

(72) Inventeur: **Allouis, Jacques**
**1, rue Octave Landwerlin**
**F-76540 Ostwald(FR)**

(74) Mandataire: **Weinmiller, Jürgen et al**
**Lennéstrasse 9 Postfach 24**
**W-8133 Feldafing(DE)**

(54) **Transmission de messages sur bus partagé.**

(57) Le système de transmission sur un bus partagé relié à plusieurs cartes informatique équipées chacune d'un microprocesseur (mP) comprend, pour chaque carte :
un contrôleur de bus (CB) relié au bus partagé, des moyens de réception (RR, MR) et des moyens d'émission (ME, RE) de messages reliés au microprocesseur et au contrôleur de bus, et un contrôleur accès direct mémoire (CADM) relié aux moyens de réception, aux moyens d'émission, au contrôleur de bus, et au microprocesseur auquel il délivre un signal d'attente pour arrêter son fonctionnement pendant le temps nécessaire audit contrôleur accès direct mémoire pour accéder aux moyens de réception ou aux moyens d'émission.

## TRANSMISSION DE MESSAGES SUR BUS PARTAGÉ.

L'invention concerne la transmission de messages sur bus partagé par plusieurs cartes informatiques qui sont liées à des appareils téléphoniques, des terminaux téléphoniques, ou des microordinateurs.

Classiquement, chaque carte étant équipée d'un microprocesseur, celui-ci assure outre des fonctions d'élaboration et de traitement de messages, la réception et l'émission de messages sur le bus partagé. Pour chaque émission ou réception de messages sur le bus le microprocesseur doit interrompre son travail en cours et procéder à une sauvegarde avant de traiter l'émission ou la réception d'un message. Le temps nécessaire pour sauvegarder des informations réduit de manière importante la disponibilité du microprocesseur pour effectuer les tâches qu'il doit assurer.

L'invention a pour but de libérer totalement le microprocesseur de toute fonction de transmission sur le bus, et ainsi de supprimer les contraintes de fonctionnement en temps réel.

L'invention a pour objet un système de transmission de messages sur un bus partagé relié à des cartes informatiques équipées chacune d'un microprocesseur comportant :
- des moyens de réception pour mémoriser des messages reçus, comportant : un registre de réception, une mémoire de réception, un circuit d'adressage en écriture de la mémoire de réception, et un circuit d'adressage en lecture de la mémoire de réception;
- des moyens d'émission pour mémoriser des messages à émettre, comportant : un registre d'émission, une mémoire d'émission, un circuit d'adressage en lecture de la mémoire d'émission, et un circuit d'adressage en écriture de la mémoire d'émission;
- un bus parallèle de données reliant : le microprocesseur, le registre de réception, le registre d'émission, la mémoire de réception, et la mémoire d'émisssion;
- une liaison adresse de lecture reliant le microprocesseur au circuit d'adressage en lecture de la mémoire de réception;
- une liaison adresse d'écriture reliant le microprocesseur au circuit d'adressage en écriture de la mémoire d'émission;
- des moyens de contrôle : reliés au bus partagé, aux moyens de réception et d'émission, et au microprocesseur auquel ils délivrent un signal d'attente pour arrêter son fonctionnement pendant un temps nécessaire pour accéder à l'un des moyens de réception et d'émisssion;

caractérisé par le fait que les moyens de contrôle sont constitués par :
- un contrôleur de bus relié : au bus partagé, au registre d'émission par une liaison série émission, et au registre de réceptioin par une liaison série réception;
- un contrôleur d'accès direct mémoire relié : au contrôleur de bus, au microprocesseur par une liaison d'attente et une liaison d'accusé de réception, au registre d'émission par une liaison de commande d'émission, et au registre de réception par une ligne de commande de réception;
- un compteur nombre de messages reçus, relié au contrôleur accès direct mémoire et relié au microprocesseur par une liaison compteur de messages reçus;
- un compteur adresse courante de réception relié au contrôleur accès direct mémoire, et relié au circuit d'adressage en écriture de la mémoire de réception par une liaison adresse d'écriture;
- un compteur nombre de messages à émettre relié au contrôleur accès direct mémoire et relié au microprocesseur par une liaison compteur de messages à émettre;
- et un compteur adresse courante d'émission relié au contrôleur accès direct mémoire et relié au circuit d'adressage de lecture de la mémoire d'émission par une liaison adresse de lecture.

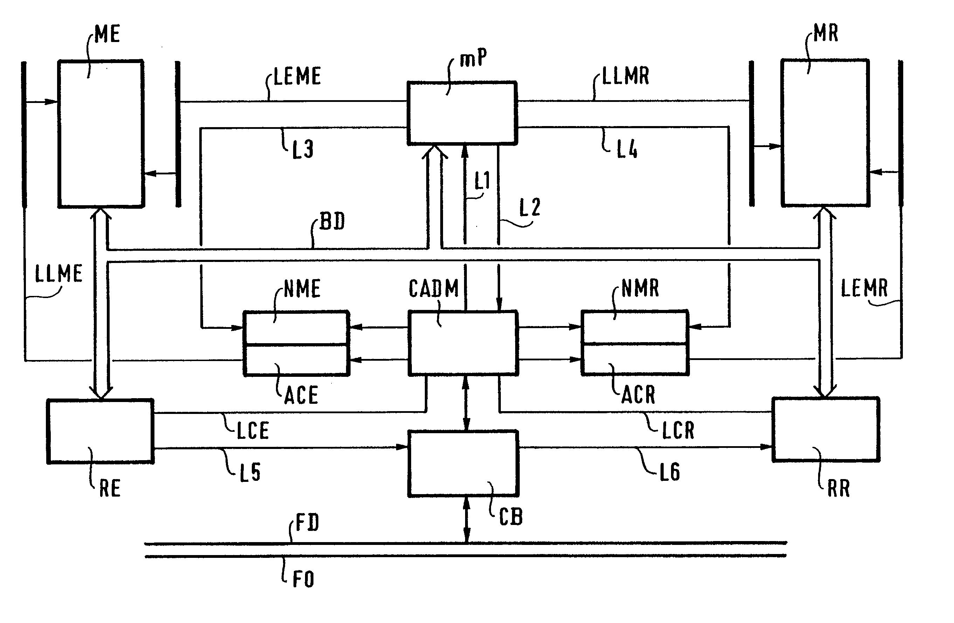

L'invention sera bien comprise par la description qui va suivre d'un exemple de réalisation d'un système de transmission illustré par la figure annexée.

Dans cette figure le microprocesseur mP est celui de la carte informatique, et seules les liaisons du microprocesseur avec le système de transmission sont représentées. Le système de transmission de l'invention est constitué par une mémoire de réception MR, de type FIFO, une mémoire d'émission ME, de type FIFO, un contrôleur accès direct mémoire, CADM, un registre émission RE, un registre réception RR, un compteur nombre de messages à émettre NME, un compteur nombre de messages reçus, NMR, un compteur d'adresse courante émission, ACE, un compteur d'adresse courante réception, ACR, et un contrôleur de bus CB.

Le système de transmission est relié par son contrôleur de bus CB au bus relié à toutes les cartes informatiques, ce bus étant constitué par un fil de données FD, sur lequel les données sont en série et un fil d'occupation FO porté à l'état "1" quand il est libre et à l'état "0" quand il est actif.

Le contrôleur de bus CB est relié au registre émission RE par une liaison série émission L5, au registre réception RR par une liaison série réception L6, et au contrôleur CADM.

Le contrôleur accès direct mémoire, CADM, est relié par une ligne de commande d'émission LCE au registre d'émission RE, et par une ligne de commande de réception LCR au registre de réception RR; il est relié aux compteurs NME, ACE, NMR et ACR; il est également relié au microprocesseur mP par une liaison d'attente L1 et par une liaison d'accusé de réception L2.

Le microprocesseur mP est relié au circuit d'adressage en écriture de la mémoire ME par une liaison adresse d'écriture à l'émission LEME, au circuit d'adressage en lecture de la mémoire de réception MR par une liaison adresse de lecture à la réception LLMR, au compteur NME par une liaison compteur de message à émettre L3, et au compteur NMR par une liaison compteur de messages reçus L4.

Le compteur ACE est relié au circuit d'adressage en lecture de la mémoire d'émission ME par une liaison adresse de lecture de la mémoire d'émission LLME, et le compteur ACR est relié au circuit d'adressage en écriture de la mémoire de réception MR par une liaison adresse d'écriture de la mémoire de réception LEMR.

Un bus de données BD, qui est un bus parallèle, relie le microprocesseur mP, aux mémoires d'émission ME et de réception MR, et aux registres d'émission RE et de réception RR.

Toutes les cartes informatiques sont en scrutation du fil d'occupation FO; dès qu'il est actif (état 0) les cartes savent, par leur contrôleur de bus CB, que le premier octet qu'elles reçoivent par le fil de données FD est un octet de contention et qu'il est suivi par un octet d'adresse destinataire. Dès qu'un contrôleur de bus reconnait son adresse il récupère les deux octets suivants qui sont des octets de longueur du message transmis, et les transmet au contrôleur CADM qui les prend en compte pour compter le nombre d'octets du message qui suivent les deux octets de longueur, et incrémenter pour chaque octet de longueur et chaque octet du message, le compteur adresse courante réception ACR, qui est un compteur modulo N, N étant la profondeur de la mémoire de réception MR.

Le contrôleur de bus envoie par la liaison série réception L6 chaque octet de longueur et de message dans le registre de réception RR; le contrôleur CADM transfère chaque octet dans la mémoire de réception MR à l'adresse indiquée par le compteur ACR et incrémente celui-ci d'une unité à chaque octet transféré. Lorsque le message est entièrement reçu, le contrôleur C A D M incrémente d'une unité le compteur nombre de messages reçus NMR.

Le microprocesseur mP, lorsqu'il a fini de travailler sur un message reçu ou à émettre, vient scruter le compteur nombre de messages reçus NMR; si ce compteur est à zéro il se met en attente et effectuera une nouvelle scrutation; si le compteur n'est pas à zéro le microprocesseur va lire la mémoire de réception MR par son pointeur de lecture qui est positionné à une adresse qui est celle de la dernière lecture incrémentée d'une unité. Les adresses successives de lecture sont délivrées sur la liaison LLMR, la lecture d'un nouveau message commençant par les deux octets de longueur de celui-ci, pour connaître la longueur du message reçu. Après lecture complète du message le microprocesseur mP décrémente d'une unité le compteur nombre de messages reçus NMR.

Quand le microprocesseur mP a généré un message à transmettre, il l'empile dans la mémoire d'émission ME à laquelle il délivre les adresses d'écriture successives des octets du message par la liaison LEME; après chargement de la mémoire d'émission le microprocesseur mP incrémente d'une unité le compteur nombre de messages à émettre NME.

Le contrôleur CADM vient scruter périodiquement le compteur NME; si le compteur n'est pas à zéro, le contrôleur CADM fait une demande de bus , et le contrôleur de bus gère la procédure de contention d'accès au bus FD. Cette procédure est la suivante : le contrôleur de bus va scruter le fil d'occupation FO et si ce fil est inactif il le met actif et envoie son octet de contention, puis il compare l'octet de contention envoyé et ce même octet reçu , et si la comparaison est bonne il en informe le contrôleur CADM. Le contrôleur CADM commande la lecture de la mémoire d'émission ME par l'intermédiaire du compteur adresse courante émission ACE qui est incrémenté d'une unité après chaque lecture d'un octet; le compteur ACE est un compteur modulo M, M étant la profondeur de la mémoire d'émission ME, et cette profondeur est généralement égale à celle de la mémoire de réception MR; donc M = N. Les octets sont transférés successivement dans le registre émission et le contrôleur CADM commande leur émission sur le bus FD via la liaison série L5 et le contrôleur de bus CB. Après envoi du message le contrôleur CADM décrémente d'une unité le compteur NME.

Le contrôleur de bus CB injecte donc bit par bit chaque octet du registre d'émission RE, à l'émission; en réception il récupère le message bit par bit pour les envoyer dans le registre de réception RR.

A la réception le contrôleur de bus calcule le contrôle cyclique par redondance et le compare à celui reçu; le résultat est transmis à la mémoire de réception MR. A l'émission le contrôleur C A D M calcule le contrôle cyclique par redondance et le transmet au contrôleur de bus CB pour émission sur le bus, fil FD.

A la réception chaque octet reçu est chargé en série dans le registre de réception RR et transféré en parallèle et sous commande du contrôleur CADM, dans la mémoire de réception MR; à l'émission chaque octet d'un message est transféré en parallèle de la mémoire d'émission ME dans le registre d'émission RE, puis émis en série sur le bus, fil FD. A chaque transfert, c'est-à-dire à chaque écriture dans la mémoire de réception MR et à chaque lecture de la mémoire d'émission ME, le contrôleur CADM émet, sur la liaison L1, un signal d'attente HRQ à destination du microprocesseur mP. Ce signal d'attente arrête le fonctionnement du microprocesseur mP, sans cependant déclencher une procédure de sauvegarde; le microprocesseur répond au signal d'attente en émettant sur la liaison L2 un signal d'accusé de réception HLDA qui autorise le contrôleur CADM à accéder aux mémoires ME et MR. Le microprocesseur mP reprend son fonctionnement automatiquement, dès l'inactivation du signal d'attente.

Par contre le microprocesseur mP accède librement aux mémoires d'émission ME et de réception MR; le signal d'attente le met dans phase bien précise de son cycle de travail qui ne nécessite pas de sauvegarde, comme cela est le cas dans l'art antérieur ou toute interruption du fonctionnement du microprocesseur entraîne une procédure de sauvegarde qui nécessite beaucoup plus de temps qu'un arrêt de fonctionnement.

Dans le système de l'invention le microprocesseur est déchargé des fonctions réception et émission sur bus, et son fonctionnement propre n'est arrêté que le temps nécessaire au contrôleur CADM pour échanger un octet entre une mémoire ME ou MR et le registre correspondant RE ou RR.

**Revendications**

1. Système de transmission de messages sur un bus partagé (FD, FO) relié à des cartes informatiques équipées chacune d'un microprocesseur (mP), comportant :
   - des moyens de réception (RR, MR) pour mémoriser des messages reçus, comportant : un registre de réception (RR), une mémoire de réception (MR), un circuit d'adressage en écriture de la mémoire de réception, et un circuit d'adressage en lecture de la mémoire de réception;
   - des moyens d'émission (ME, RE) pour mémoriser des messages à émettre, comportant : un registre d'émission (RE), une mémoire d'émission (ME), un circuit d'adressage en lecture de la mémoire d'émission, et un circuit d'adressage en écriture de la mémoire d'émission;
   - un bus parallèle de données (BD) reliant : le microprocesseur (mP), le registre de réception (RR), le registre d'émission (RE), la mémoire de réception (MR), et la mémoire d'émisssion (ME);
   - une liaison adresse de lecture (LLMR) reliant le microprocesseur au circuit d'adressage en lecture de la mémoire de réception;
   - une liaison adresse d'écriture (LEME) reliant le microprocesseur au circuit d'adressage en écriture de la mémoire d'émission;
   - des moyens de contrôle reliés : au bus partagé, (FD, FO), aux moyens de réception (MR, RR) et d'émission (ME, RE), et au microprocesseur (mP) auquel ils délivrent un signal d'attente pour arrêter son fonctionnement pendant un temps nécessaire pour accéder à l'un des moyens de réception et d'émisssion;
   caractérisé par le fait que les moyens de contrôle sont constitués par :
   - un contrôleur de bus (CB) relié : au bus partagé (FD, FO), au registre d'émission (RE) par une liaison série émission (L5), et au registre de réception par une liaison série réception (L6);
   - un contrôleur d'accès direct mémoire (CADM) relié : au contrôleur de bus (CB), au microprocesseur (mP) par une liaison d'attente (L1) et une liaison d'accusé de réception (L2), au registre d'émission (RE) par une liaison de commande d'émission (LCE), et au registre de réception (RR) par une liaison de commande de réception (LCR);
   - un compteur nombre de messages reçus, (NMR) relié au contrôleur accès direct mémoire (CADM) et relié au microprocesseur (mP) par une liaison compteur de messages reçus (L4);
   - un compteur adresse courante de réception (ACR) relié au contrôleur accès direct mémoire (CADM), et relié au circuit d'adressage en écriture de la mémoire de réception (MR) par une liaison adresse d'écriture (LEMR);
   - un compteur nombre de messages à émettre (NME) relié au contrôleur accès direct mémoire (CADM) et relié au microprocesseur par une liaison compteur de messages à émettre (L3);
   - et un compteur adresse courante d'émission (ACE) relié au contrôleur accès direct mémoire (CADM) et relié au circuit d'adressage de lecture de la mémoire

**EP 0 436 931 A1**

d'émission (ME) par une liaison adresse de lecture (LLME).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | ELECTRONIQUE INDUSTRIELE (Supplément), no. 17 (Suppl. au no. 135), décembre 1987, pages 35-40, Paris, FR; M. BALAKRISHNAN: "Controleur de reseau local 802.3 pour traitement d'informations parpaquet" * Page 37, colonne de droite, ligne 23 - page 38, colonne de droite, ligne 2; page 39, colonne du milieu, ligne 33 - page 39, colonne de droite, ligne 29 * — — — | 1 | H 04 L 12/40 |
| A | EP-A-0 117 677   (I.C.L.) * Page 16, ligne 16 - page 17, ligne 8; figures 1,2,3 * — — — | 1 | |
| A | IEEE/IEICE GLOBAL TELECOMMUNICATIONS CONFE-RENCE 1987, CONFERENCE RECORD, Tokyo, 15-18 novembre 1987, vol. 3, pages 44.6.1-44.6.4, IEEE, New York, US; T.G. LAWELL: "Performance oriented controller for ISDN and SNA applications" * Page 44.6.4, colonne de droite, lignes 1-27; figure 7 * — — — | 1 | |
| A | WO-A-8 403 192   (A.T.T.) * Page 10, ligne 1 - page 11, ligne 5; page 11, ligne 36 - page 12, ligne 27; page 14, lignes 21-33 * — — — — — | 1 | **DOMAINES TECHNIQUES RECHERCHES (Int. Cl.5)** H 04 L |

Le présent rapport de recherche a été établi pour toutes les revendications

| Lieu de la recherche | Date d'achèvement de la recherche | Examinateur |
|---|---|---|
| La Haye | 03 avril 91 | DE LA FUENTE DEL AGU |